Europäisches Patentamt

European Patent Office

Office européen des brevets

(19)

(11) EP 0 798 348 B1

(12) **EUROPÄISCHE PATENTSCHRIFT**

(45) Veröffentlichungstag und Bekanntmachung des Hinweises auf die Patenterteilung:
**30.12.1998 Patentblatt 1998/53**

(51) Int Cl.6: **C09C 1/30**, C11D 3/12, A01N 25/08

(21) Anmeldenummer: **97104825.1**

(22) Anmeldetag: **21.03.1997**

(54) **Teilhydrophobe Fällungskieselsäuren**

Partially hydrophobic precipitated silicas

Silices précipitées partiellement hydrophobes

(84) Benannte Vertragsstaaten:
**AT BE CH DE DK ES FI FR GB IE IT LI NL SE**

(30) Priorität: **29.03.1996 DE 19612501**

(43) Veröffentlichungstag der Anmeldung:
**01.10.1997 Patentblatt 1997/40**

(73) Patentinhaber: **Degussa Aktiengesellschaft**
**60311 Frankturt (DE)**

(72) Erfinder:
• **Oelmüller, Rolf**
**63454 Hanau (DE)**
• **Müller, Astrid**
**63571 Gelnhausen (DE)**
• **Meier, Karl**
**53347 Alfter (DE)**
• **Lux, Heinz-Günther**
**63538 Grosskrotzenburg (DE)**
• **Ramb, Anja**
**63517 Rodenbach (DE)**

(56) Entgegenhaltungen:
EP-A- 0 142 910    EP-A- 0 492 124
FR-A- 2 078 599    GB-A- 2 144 555

• **DATABASE WPI Week 9314 Derwent Publications Ltd., London, GB; AN 93-113587 XP002031320 & JP 05 053 369 A (CANON K.K.)**
• '**Ullmanns Encyclopädie der technischen Chemie**', Band 21, 1982, VERLAG CHEMIE GMBH, D-6940 WEINHEIM * Seite 458 - Seite 471 *

**Beschreibung**

Die Erfindung betrifft teilhydrophobe Kieselsäuren, ein Verfahren zu ihrer Herstellung,ihre Verwendung als Träger für hydrolyseempfindliche Wirkstoffe sowie ihre Verwendung in Entschäumern.

Es ist bekannt, hydrophobe Kieselsäuren in einer hydrophoben Flüssigkeit zur Herstellung eines Entschäumers einzusetzen (DE-C 2829906); US-A 4377 493; DE-C 3411 759; US-A 4344 858; Kalman Koczo et al., Journal of Colloid and Interface Science 166, 225-238 (1994), WO 95/05880).

Bekannte Entschäumer bestehen aus einer Mischung unpolarer Öle und hydrophober Partikel. Typischerweise liegt der Feststoffgehalt bei 1-20 %. Diese Mischungen sind effektivere Entschäumer als das Öl oder die hydrophoben Partikel alleine. Entschäumer werden in der Textil-, Papier-, Farben-, Lack-, Waschmittel-Industrie eingesetzt.

Bekannte Pflanzenschutzmittel werden im wesentlichen als Spritzpulver, als Staubkonzentrate, dispergierbare Granulate oder als emulgierbare Konzentrate gehandhabt.

Bekannte Spritzpulver(WP) bestehen aus den folgenden Komponenten:
Pestizider Wirkstoff, Trägerfüllstoff, Dispergier- und Netzmittel sowie gegebenenfalls weiteren Zusätzen. Nach gründlicher Vormischung dieser Bestandteile folgt eine Grobvermahlung, der eine Feinvermahlung angeschlossen wird. Der Einsatz erfolgt als wäßrige Spritzbrühe.

Bekannte Staubkonzentrate (DP) bestehen nur aus Wirkstoff und Füllstoff. Die Formulierung erfolgt analog der Formulierung von Spritzpulvern. Es unterbleibt jedoch oft eine Feinvermahlung. Die Staubkonzentrate werden nach dem Verschnitt mit mineralischen Füllstoffen, wie Kaolin, Talkum oder Dolomit, staubförmig ausgebracht.

Bekannte dispergierbare Granulate (WG) sind feste Formulierungen, die aus pestizidem Wirkstoff, Trägerfüllstoff, Dispergier-Netzmittel und gegebenenfalls weiteren Zusätzen bestehen. Diese Mischung wird feinvermahlen und anschliessend nach bekannten Methoden granuliert. Der Einsatz erfolgt als wäßrige Spritzbrühe.

Bekannte emulgierbare Konzentrate (EC) sind flüssig und enthalten lösungsmittelhaltige Bestandteile. Zur Vermeidung der Lösungsmittel, die die Umwelt belasten können, ist man bestrebt, die emulgierbaren Konzentrate durch feste Formulierungen zu ersetzen.

Es ist bekannt, bei der Herstellung der Pflanzenschutz-, Schädlingsbekämpfungs- oder Viehkraftfuttermittel hydrophile gefällte Kieselsäure als Trägerstoff zu verwenden (DE-B 16 19 865). Die bekannterweise eingesetzten Kieselsäuren weisen eine hohe Ölaufnahme und ein hohes Saugvermögen auf.

Nachteiligerweise wird jedoch bei der Verwendung der bekannten gefällten, hydrophilen Kieselsäuren bei der Herstellung von Mitteln, die hydrolyseempfindliche Wirkstoffe enthalten, eine verringerte Lagerbeständigkeit der Wirkstoffe festgestellt. Dies gilt insbesondere für Wirkstoffe im Pflanzenschutz, die aufgrund ihrer Hydrolyseempfindlichkeit bisher nur als emulgierbare Konzentrate weiterverarbeitet werden können.

Die bekannten hydrophoben Fällungskieselsäuren, wie z.B. die Fällungskieselsäuren gemäß DE 26 28975 C2, DE-C 27 29 244, DE-A 24 35 860, EP-A 492 124, DE-A 25 13 608 sind hochhydrophobiert und haben daher in der Wirkstofformulierung einen nachteilig hohen Netzmittelbedarf.

Es besteht somit die Aufgabe, einen Trägerstoff für, insbesondere hydrolyseempfindliche, Wirkstoffe, wie zum Beispiel Pflanzenschutz- oder Futtermittel sowie Wirkstoffe der chemischen Industrie, zur Verfügung zu stellen, der eine längere Lagerstabilität des Wirkstoffes gewährleistet.

Bei dem Einsatz in Entschäumern hat die bekannte Kieselsäure den Nachteil, daß diese Kieselsäure bei längerer Lagerzeit des Entschäumers insbesondere bei der Verwendung niedrig viskoser Öle und einem geringen Feststoffanteil sedimentiert. Durch die Sedimentation der bekannten Kieselsäure tritt eine Verschlechterung der Entschäumerwirkung ein. Die sedimentierte Kieselsäure muß außerdem in einem aufwendigen Verfahren vor dem Gebrauch des Entschäumers wieder aufgerührt werden.

Zur Vermeidung der Sedimentationsneigung muß eventuell zu der bekannten Kieselsäure ein Dispergiermittel wie z. B. eine pyrogene Kieselsäure zu der Entschäumermischung hinzugefügt werden (Degussa-Schriftenreihe Pigmente Nr. 42, Seite 11). Dies bedingt eine Änderung der Entschäumer-Rezeptur, die ihrerseits eine weitere Austestung erforderlich macht, das Produkt verteuert und einen zusätzlichen Verfahrensschritt zur Einarbeitung des Dispergiermittels bedeutet.

Es ist z.B. aus der DE 28 29 906 C3 bekannt, eine Zubereitung der Entschäumerwirkstoffe so herzustellen, daß eine hohe Dispersionsstabilität erreicht wird, indem man in ein Gemisch aus einem Entschäumeröl und einem Emulgator zunächst die hydrophobe und dann die benötigte Menge an hydrophiler Kieselsäure unter weiterem Rühren zugibt.

Die vorliegende Erfindung hat demgegenüber zum Vorteil, daß man in einem Verfahrensschritt die Kieselsäure in ein Entschäumeröl einrühren und anschließend dispergieren und so ohne einen zusätzlichen Verfahrensschritt eine stabile Entschäumerdispersion erhalten kann.

Gegenstand der Erfindung ist eine teilhydrophobe Fällungskieselsäure, welche gekennzeichnet ist durch eine Methanolbenetzbarkeit von 10 bis 49 %. Die erfindungsgemäße Fällungskieselsäure kann eine DBP-Aufnahme (wasserfrei) von größer 250g/100g (DBP-Zahl) und gegebenenfalls eine mittlere Teilchengröße von 1-12 μm aufweisen.

EP 0 798 348 B1

Die erfindungsgemäße teilhydrophobe Fällungskieselsäure kann einen Kohlenstoffgehalt von 0,3 bis 1,85 %, vorzugsweise von 0,5 bis 1,5 % und/oder einen pH-Wert von 5,5 bis 10 und/oder einen Trocknungsverlust von 2,6 bis 10 %, vorzugsweise von 3 bis 6 %, aufweisen.

Insbesondere kann die erfindungsgemäße teilhydrophobe Fällungskieselsäure eins oder mehrere der folgenden physikalisch-chemischen Kenndaten aufweisen.

| | |
|---|---|
| Oberfläche (BET), m$^2$/g | 75 - 250 |
| Stampfdichte, g/l (DIN ISO 787/11) | 70 - 150 |
| Trocknungsverlust 2h/105°C,% (DIN ISO 787/2) | 2,6 - 10,0 |
| Glühverlust bez. auf die 2h/105°C getr. Subst., % (DIN ISO 3262/11) | 2,5 - 7,5 |
| pH-Wert, 5 % (methanol.-wässr. Lsg.) (DIN ISO 787/9) | 5,5 - 10 |
| Leitfähigkeit (methanol-wässr. Lsg.) (µS/cm) | ≤ 600 |
| DBP-Aufnahme, wasserfrei, g/100 g | ≥ 250 |
| Methanolbenetzbarkeit, titriert, % | 10 - 49 |
| Mittlere Teilchengröße, Coulter Counter, µm | 1 - 12 |
| Kohlenstoffgehalt, % | 0,3 - 1,85 |
| SiO$_2$, % (DIN ISO 3262/19) | ≥ 98 |

Die Kieselsäure kann eine Fällungskieselsäure sein, welche nach seiner Herstellung und/oder auch während seiner Herstellung mit einem Hydrophobierungsmittel behandelt wurde, um die oben beschriebenen Kennzeichen zu erhalten.

Fällungskieselsäuren sind bekannt aus Ullmanns Enzyklopädie der technischen Chemie, 4. Auflage, Band 21, Seiten 458 bis 473 (1988).

Die Herstellung von hochhydrophoben Kieselsäuren ist z.B. aus DE 44 19 234 A1, DE-C 27 29 244, DE 26 28 975 C2 und DE-OS 21 07 082 bekannt.

Bei DE 26 28 975 C2 und DE-C 27 29 244 handelt es sich um hochhydrophobe Fällungskieselsäuren. Bei den beiden anderen Patentschriften bzw. Offenlegungsschriften handelt es sich um hochhydrophobe und teilhydrophobe, pyrogene Kieselsäuren mit unterschiedlichen physikalisch-chemischen Kenndaten, die nicht identisch mit den Kenndaten der erfindungsgemäßen Fällungskieselsäure sind.

Der Einsatz von hochhydrophoben pyrogenen Kieselsäuren zur Abpuderung von Pestizidgranulaten ist in DE 29 28 585 A1 beschrieben, der Einsatz von pyrogenen Kieselsäuren als Additiv in Wirkstofformulierungen ist in EP 0 111 112 A1 erläutert.

Die erfindungsgemäße teilhydrophobe Fällungskieselsäure kann aus 85 bis 98 Gew.-% Fällungskieselsäure und 15 bis 2 Gew.-% Hydrophobierungsmittel (Silikonöl, welches einen Kohlenstoffgehalt von 32,4 % aufweisen kann) bestehen. Sie kann dadurch hergestellt werden, daß man zur Erzielung des gewünschten Hydrophobierungsgrades die notwendige Hydrophobierungsmittelmenge unter Anwendung hoher Scherkräfte mittels einer kontinuierlichen Schervorrichtung die Ultra - Turrax, Kothoff - Mischsirene oder Rheinhütte - Mischer mit nach bekanntem Verfahren hergestellter Fällungskieselsäuresuspension nach vorgegebenem Verhältnis bei sehr kurzer Verweilzeit von maximal 5 Sekunden und niedrigem pH-Wert von 3 vermischt, die hydrophobierungsmittelhaltige Fällungskieselsäuresuspension filtriert und salzfrei wäscht, den mit Hydrophobierungsmittel homogen vermischten Fällungskieselsäurefilterkuchen nach bekannten Verfahren trocknet, thermisch nachbehandelt oder tempert und anschliessend einer mechanischen- bzw. Strahlvermahlung unterzieht.

Insbesondere kann man Silikonöl unter Anwendung von hoher Scherenergie mit nach bekannten Verfahren hergestellter Fällungskieselsäuresuspension, mit oder ohne Zusatz von Phasenvermittlungsstoffen (z.B. Netzmittel, Emulgatoren), innig vermischen.

Als kontinuierliche Schervorrichtung kann ein Ultra - Turrax, eine Kothoff - Mischsirene oder ein Rheinhütte - Mischer eingesetzt werden. Anschließend wird die mit Hydrophobierungsmittel homogen vermischte Fällungskieselsäuresuspension über bekannte Filtrationsapparate (z.B. Kammerfilterpresse, Drehfilter) abgetrennt und der hydrophobierungsmittelhaltige Feststoff salzfrei gewaschen. Dabei wird das Hydrophobierungsmittel vollständig vom Fällungskieselsäurefilterkuchen aufgenommen. Die anfallenden Filtrate sind nicht mit Organosilizium-Verbindungen belastet,

3

so daß die gemessene TOC - Gehalte < 10 mg/l betragen.

Die im Mischprozeß zum Einsatz gebrachten Fällungskieselsäuresuspensionen sowie das Hydrophobierungsmittel sind durch folgende physikalisch - chemische Stoffdaten gekennzeichnet:

Fällungskieselsäure A (Die Stoffdaten beziehen sich auf eine filtrierte, gewaschene und getrocknete Fällungskieselsäureprobe, ohne Zusatz von Hydrophobierungsmittel) :

| | |
|---|---|
| BET-Oberfläche nach DIN 66131 | 150+/-50 [m$^2$/g] |
| Mittlere Größe der Primärteilchen aus EM-Aufnahmen | 15-25 [nm] |
| Trocknungsverlust nach DIN 55921 nach 2h bei 105 °C. | 2,5-4,5 [%] |
| Glühverlust (bezogen auf die 2h bei 105 °C getrocknete Substanz nach DIN 55921) | 3+/-0,5 [%] |
| pH-Wert (in 5%iger wäßriger Dispersion nach DIN 53200) | 3,5-6,5 |
| Leitfähigkeit /in 4%iger wäßriger Dispersion) | < 1000 [μS] |
| SO$_3$-Gehalt (bezogen auf die 2h bei 105 °C getrocknete Substanz nach DIN 55921) | 0,3 [%] |
| Na$_2$O-Gehalt (bezogen auf die 2h bei 105 °C getrocknete Substanz nach DIN 55921) | 0,3 [%] |

Fällungskieselsäure B (Die Stoffdaten beziehen sich auf eine filtrierte, gewaschene und getrocknete Fällungskieselsäure ohne Zusatz von Hydrophobierungsmittel) :

| | |
|---|---|
| BET-Oberfläche nach DIN 66131 | 300+/-50 [m$^2$/g] |
| Mittlere Größe der Primärteilchen aus EM-Aufnahmen | 10-15 [nm] |
| Trocknungsverlust nach DIN 55921 nach 2h bei 105 °C | 2,5-4,5 [%] |
| Glühverlust (bezogen auf die 2h bei 105 °C getrocknete Substanz nach DIN 55921) | 3+/-0,5 [%] |
| pH-Wert (in 5%iger wäßriger Dispersion nach DIN 53200) | 3,5-6,5 |
| Leitfähigkeit /in 4%iger wäßriger Dispersion) | < 1000 [μS] |
| SO$_3$-Gehalt (bezogen auf die 2h bei 105 °C getrocknete Substanz nach DIN 55921) | < 0,3 [%] |
| Na$_2$O-Gehalt (bezogen auf die 2h bei 105 °C getrocknete Substanz nach DIN 55921) | < 0,3 [%] |

Als Hydrophobierungsmittel kann man insbesondere Silikonöl, bestehend aus Dimethylpolysiloxanen mit einer Viskosität von 20 bis 1000 mPas, vorzugsweise mit 50 mPas verwenden. Weiterhin können verwendet werden: R$_2$R'Si, wobei R=CH$_3$O-, C$_2$H$_5$O-, Cl-, R'=CH$_3$-, C$_2$H$_5$-, HMDS (Hexamethyldisilazan), D4 (Octamethyltetrasiloxan), D6, D8, R$_3$Si-C$_n$H$_{2n+1}$, wobei n=1-18, R=CH$_3$O-, C$_2$H$_5$O-, C$_3$H$_7$O-, Cl-, insbesondere Si 108 (Trimethoxyoctylsilan), Si 116, Polymethylsiloxane, Polymethylsiloxanemulsionen, (Trimethyloxyhexadecylsilan), Aminopropylsilane, Vinylsilane, Methacrylsilane.

Der anfallende, mit Hydrophobierungsmittel homogen versetzte Fällungskieselsäurefilterkuchen, wird im nachfolgenden Verfahrensschritt in bekannten Trocknungsaggregaten getrocknet. Als Trocknungsaggregat für die Trocknung des hydrophobierungsmittelhaltigen Filterkuchens kann ein Bandtrockner oder Spin-Flash-Trockner eingesetzt werden. Zur Erzielung des gewünschten Hydrophobierungsgrades wird das hydrophobierungsmittelhaltige Trockenprodukt bei 300 °C bis 400 °C, vorzugsweise 350 °C, 30 bis 60 Minuten lang in einem diskontinuierlichen, elektrisch beheizten Rührwerksbehälter bzw. in einem kontinuierlichen, elektrisch beheizten Doppelschneckenreaktor einer thermischen Nachbehandlung unterzogen bzw. getempert und anschließend mechanisch oder mittels Strahlmühlen vermahlen.

Gegenüber der oben beschriebenen prinzipiell mit den bekannten Verfahren vergleichbaren Herstellung kann die erfindungsgemäße, teilhydrophobe Fällungskieselsäure insbesondere durch das nachfolgende Verfahren der Naßhydrophobierung, das aus dem Stand der Technik nicht ableitbar ist, hergestellt werden:

Zu einem Massenstrom von 160 kg/h einer wässrigen Fällungskieselsäuresuspension mit einem Feststoffgehalt von 85 g/l, die nach bekanntem Herstellverfahren hergestellt wurde, wird unter Einhaltung eines pH-Wertes von 3, ein Massenstrom von 0,424 kg/h Polymethylsiloxan über einen kontinuierlichen Mischer mit hohem Scherenergieeintrag, bei einer Temperatur der beiden zu mischenden Komponenten von 25 +/- 5°C, hinzugegeben. Die Verweilzeit im Mischer darf dabei 5 Sekunden nicht übersteigen. Als Führungsgröße für den Belegungsprozeß dient der dimensionslose Belegungsindex $B_i$, der das Verhältnis der Wirkstoffanteile der beiden zu mischenden Massenströme zueinander beschreibt. Zur Erzielung der erfindungsgemäßen hydrophoben Eigenschaft der Fällungskieselsäure ist ein Belegungsindex von 32 erforderlich.

Die mit Silikonöl belegte Fällungskieselsäure wird nachfolgend ohne Inanspruchnahme einer weiteren Nachreaktionszeit nach bekannten Verfahren abgetrennt, nahezu elektrolytfrei gewaschen, bei 105°C getrocknet, bei 370°C 1,0 Stunde getempert und anschließend vermahlen.

Es hat sich gezeigt, daß die erfindungsgemäße Kieselsäure insbesondere durch den niedrigen pH-Wert und die kurze Verweilzeit im Mischer hergestellt werden kann.

Die Methanolbenetzbarkeit, die ein Maß für die Hydrophobie ist, wird wie folgt bestimmt:

1. Grundlagen

Kieselsäuren, deren Oberflächen mit nicht hydrolisierbaren, organischen Gruppen modifiziert sind, werden meist von Wasser nicht benetzt. Diese hydrophoben Kieselsäuren lassen sich jedoch von einem Methanol/Wasser-Gemisch benetzen. Der Anteil des Methanols an diesem Gemisch - in Gewichtsprozenten ausgedrückt - ist ein Maß für die Hydrophobie der modifizierten Kieselsäure. Je höher der Methanolanteil ist, desto besser ist die Substanz hydrophobiert.

2. Geräte und Reagenzien

Eine 20 ml-Meßpipette mit Skaleneinteilung
Ein 250 ml-Scheidetrichter
Methanol p.a.

3. Durchführung

200 mg der hydrophoben Kieselsäure und 50 ml Wasser werden in einen 250 ml-Scheidetrichter gegeben. Die Kieselsäure bleibt an der Wasseroberfläche. Anschließend taucht man die Spitze der mit Methanol gefüllten Meßpipette in die flüssige Phase (um einen direkten Kontakt zwischen der Kieselsäure und dem reinen Methanol zu vermeiden) und läßt das Methanol langsam zulaufen. Dabei wird der Scheidetrichter mit einer kreisförmigen Handbewegung geschüttelt, so daß in der Flüssigkeit ein Wirbel entsteht. Es wird so lange Methanol zugegeben, bis die Festsubstanz benetzt ist. Dies ist der Fall, wenn

a) sich die Kieselsäure nicht mehr über die ganze Oberfläche der flüssigen (bereits Methanol enthaltenden) Phase verteilt und die relativ klare, filmfreie Flüssigkeit sichtbar wird.

b) der Kieselsäurefilm, der sich über die Phasengrenzfläche an der Scheidetrichterwand bildet, verschwindet.

c) an der Scheidetrichterwand beim Schütteln feuchte Kieselsäureagglomerate haften bleiben.

4. Auswertung

Die Angabe der Methanolbenetzbarkeit erfolgt in Gew.-% Methanol der Methanol/Wasser-Mischung nach der Formel:

$$\text{Methanolbenetzbarkeitswert} = \frac{0,79 \text{x} \cdot 100}{0,79 + 50}$$

$$\text{x} = \text{Methanolverbrauch in ml}$$

Der Methanolverbrauch bei dieser Methode kann bei der gleichen Person und derselben Probe um 2 ml differieren.

Die DBP-Aufnahme (DBP-Zahl), die ein Maß für die Saugfähigkeit der Fällungskieselsäure ist, wird wie folgt bestimmt:

## 1. Grundlagen

Die Bestimmung der Dibutylphthalat-Zahl erfolgt mit dem Brabender-Plastographen. Die DBP-Zahl ist ein Maß für die Saugfähigkeit bzw. das Aufnahmevermögen eines pulverförmigen Produktes an Flüssigkeit. Das Aufnahmevermögen ist abhängig vom Feuchtegehalt, der Körnung und Einwaage des untersuchten Materials.

## 2. Geräte und Reagenzien

Brabender-Plastograph mit Schreibvorrichtung
Multi-Dosimat E 415 (50 1) der Firma Metrohm
Dibutylphthalat

## 3. Durchführung

12,5 g Kieselsäure werden in den Kneter des Brabender-Plastographen gegeben. Unter ständigem Mischen (Umlaufgeschwindigkeit der Kneterschaufeln 125 UpM) fließt Dibutylphthalat mit einer Geschwindigkeit von 4 ml/Minute in die Mischung. Das Einmischen erfordert nur geringen Kraftbedarf. Gegen Ende der Bestimmung wird das Gemisch schlecht rieselfähig. Diese Tatsache dokumentiert sich in einem Anstieg des Kraftbedarfes, der auf einer Skala angezeigt wird. Bei einem Skalenausschlag von 300 wird die DBP-Dosierung automatisch abgeschaltet.

## 4. Auswertung

Die Dichte von DBP beträgt 1,047 g/ml.

$$\text{Gew.-\% DBP - Aufnahme} = \frac{\text{ml DBP} \cdot 1,047 \cdot 100}{12,5}$$

Die DBP-Aufnahme wird auf die wasserfreie, getrocknete Substanz bezogen. Bei Verwendung von Fällungskieselsäuren mit höheren Feuchtigkeitsgehalten ist, wenn diese Fällungskieselsäuren vor der Bestimmung der DBP-Zahl nicht getrocknet werden, der Wert mittels der Korrekturtabelle zu korrigieren. Die Verwendung der Korrekturtabelle kann im Vergleich zur Bestimmung bei getrockneten Fällungskieselsäuren zu deutlichen Abweichungen führen.

Korrekturtabelle für Dibutylphthalataufnahme - wasserfrei - (Korrekturwerte entsprechend dem Wassergehalt zum ermittelten Wert addieren)

| % Wasser → ↓ | ,0 | ,2 | ,4 | ,6 | ,8 |
|---|---|---|---|---|---|
| | % Dibutylphthalat | | | | |
| 0 | 0 | 2 | 4 | 5 | 7 |
| 1 | 9 | 10 | 12 | 13 | 15 |
| 2 | 16 | 18 | 19 | 20 | 22 |
| 3 | 23 | 24 | 26 | 27 | 28 |
| 4 | 28 | 29 | 29 | 30 | 31 |
| 5 | 31 | 32 | 32 | 33 | 33 |
| 6 | 34 | 34 | 35 | 35 | 36 |
| 7 | 36 | 37 | 38 | 38 | 39 |
| 8 | 39 | 40 | 40 | 41 | 41 |
| 9 | 42 | 43 | 43 | 44 | 44 |
| 10 | 45 | 45 | 46 | 46 | 47 |

DBP-Aufnahme

Einwaage 12,5 g F = 8,376

| ml DBP-Verbrauch → ↓ | ,0 | ,1 | ,2 | ,3 | ,4 | ,5 | ,6 | ,7 | ,8 | ,9 |
|---|---|---|---|---|---|---|---|---|---|---|
| | % DBP-Aufnahme | | | | | | | | | |
| 15 | 126 | 126 | 127 | 128 | 129 | 130 | 131 | 132 | 132 | 133 |
| 16 | 134 | 135 | 136 | 137 | 137 | 138 | 139 | 140 | 141 | 142 |
| 17 | 142 | 143 | 144 | 145 | 146 | 147 | 147 | 148 | 149 | 150 |
| 18 | 151 | 152 | 152 | 153 | 154 | 155 | 156 | 157 | 157 | 158 |
| 19 | 159 | 160 | 161 | 162 | 162 | 163 | 164 | 165 | 166 | 167 |
| 20 | 168 | 168 | 169 | 170 | 171 | 172 | 173 | 173 | 174 | 175 |
| 21 | 176 | 177 | 178 | 178 | 179 | 180 | 181 | 182 | 183 | 183 |
| 22 | 184 | 185 | 186 | 187 | 188 | 188 | 189 | 190 | 191 | 192 |
| 23 | 193 | 193 | 194 | 195 | 196 | 197 | 198 | 199 | 199 | 200 |
| 24 | 201 | 202 | 203 | 204 | 204 | 205 | 206 | 207 | 208 | 209 |
| 25 | 209 | 210 | 211 | 212 | 213 | 214 | 214 | 215 | 216 | 217 |
| 26 | 218 | 219 | 219 | 220 | 221 | 222 | 223 | 224 | 224 | 225 |
| 27 | 226 | 227 | 228 | 229 | 230 | 230 | 231 | 232 | 233 | 234 |
| 28 | 235 | 235 | 236 | 237 | 238 | 239 | 240 | 240 | 241 | 242 |
| 29 | 243 | 244 | 245 | 245 | 246 | 247 | 248 | 249 | 250 | 250 |
| 30 | 251 | 252 | 253 | 254 | 255 | 255 | 256 | 257 | 258 | 259 |
| 31 | 260 | 260 | 261 | 262 | 263 | 264 | 265 | 266 | 266 | 267 |
| 32 | 268 | 269 | 270 | 271 | 271 | 272 | 273 | 274 | 275 | 276 |
| 33 | 276 | 277 | 278 | 279 | 280 | 281 | 281 | 282 | 283 | 284 |
| 34 | 285 | 286 | 286 | 287 | 288 | 289 | 290 | 291 | 291 | 292 |
| 35 | 293 | 294 | 295 | 296 | 297 | 297 | 298 | 299 | 300 | 301 |
| 36 | 302 | 302 | 303 | 304 | 305 | 306 | 307 | 307 | 308 | 309 |
| 37 | 310 | 311 | 312 | 312 | 313 | 314 | 315 | 316 | 317 | 317 |
| 38 | 318 | 319 | 320 | 321 | 322 | 322 | 323 | 324 | 325 | 326 |
| 39 | 327 | 327 | 328 | 329 | 330 | 331 | 332 | 333 | 333 | 334 |
| 40 | 335 | 336 | 337 | 338 | 338 | 339 | 340 | 341 | 342 | 343 |
| 41 | 343 | 344 | 345 | 346 | 347 | 348 | 348 | 349 | 350 | 351 |
| 42 | 352 | 353 | 353 | 354 | 355 | 356 | 357 | 358 | 358 | 359 |
| 43 | 360 | 361 | 362 | 363 | 364 | 364 | 365 | 366 | 367 | 368 |
| 44 | 369 | 369 | 370 | 371 | 372 | 373 | 374 | 374 | 375 | 376 |
| 45 | 377 | 378 | 379 | 379 | 380 | 381 | 382 | 383 | 384 | 384 |

Bestimmung der Korngröße (Coulter Counter)

Anwendung: Die Bestimmung der Korngröße (Kornkennlinie) von Kieselsäuren mit dem Coulter Counter erfolgt in einer wäßrigen Elektrolyt-Lösung (Isoton II).

Durchführung der Bestimmung:

Die Bechergläser (2 Stück je Zählung), der Magnet und die Pipettenspitzen werden in einem Stickstoffstrom von 5-6 bar staubfrei geblasen. Die Bechergläser werden dann umgekehrt auf staubfreies Linsenpapier gesetzt, der Magnet und die Pipettenspitzen in eine ebenfalls ausgeblasene Petrischale gegeben.

0,100 g der zu untersuchenden Substanz werden auf der Analysenwaage abgewogen und in das Becherglas überführt. Der Magnet wird zugegeben, mit etwas Isotonlösung zunächst benetzt und anschließend auf die 60 ml-Markierung mit Isoton aufgefüllt. Die Suspension wird dann ½ Minuten mit dem Magnetrührer bei Stellung 3 (Skala 1-10) gerührt. Anschließend hängt man das Becherglas in das Ultraschallbad und beschallt genau 1 Minute. Dabei ist darauf zu achten, daß die Eintauchtiefe in das destillierte Wasser des Ultraschallbades genau bis zur 60 ml-Markierung des Becherglases reicht. Nach dem Beschallen wird das Becherglas auf den Magnetrührer zurückgestellt und während des Rührens (wieder Stellung 3) mit der automatischen Pipette eine Probe der Suspension entnommen. Es sollte die gesamte entnommene Menge für die Zählung verwendet werden. wird etwas weniger Suspension benötigt, sollte weniger Suspension in die Pipettenspitze gezogen werden.

Das zweite 100 ml Becherglas wird mit Isoton II-Lösung gefüllt, auf die Becherplattform gestellt und die Kapillare (100 μm) sowie der Rührer eingetaucht. Der Rührer wird auf eine mäßige Geschwindigkeit eingestellt.

Lösungen und Geräte:

100 ml Bechergläser
Automatische Pipette - Pipetman der Fa. Gilson
Kunststoff-Pipettenspitze
Magnetrührer und Magnet (Länge 3 mm)
Ultraschallbad: Fa. Bandelin, Sonorex RK 102
Analysenwaage
Staubfreies Linsenpapier
Stickstofflasche mit Trockenvorrichtung und Düse
Petrischale
Stoppuhr
Kornanalysenpapier
Isoton II-Lösung
Coulter Counter Model TA II

Die erfindungsgemäße Kieselsäure kann zur Herstellung von Pflanzenschutzmitteln mit hydrolyseempfindlichen Wirkstoffen verwendet werden. Es können hierbei Spritzpulver oder wasserdispergierbare Granulate, die in wasserlöslichen Folienbeuteln in Kartonumverpackungen eingesetzt werden können, hergestellt werden. Dadurch lassen sich Vorteile beim Transport, bei Gefahrstoffeinstufungen, bei eingesparten Verpackungsabfällen und damit verbunden Kostenreduzierungen erzielen.

Die erfindungsgemäße Kieselsäure kann insbesondere bei dem Einsatz von Wirkstoffen aus der Gruppe der Phosphorsäureester (Malathion, Diazinon etc.) verwendet werden.

Analog läßt sich auch die Anwendungsform eines jeden anderen Wirkstoffes formulieren.

Die mit der erfindungsgemäßen Kieselsäure hergestellten Wirkstofformulierungen, wie zum Beispiel Pflanzenschutzmittel, weisen zusätzlich den Vorteil einer langen Lagerstabilität des Wirkstoffes auf.

**Lagerung von 50WP Malathion und Wirkstoffstabilität**

Herstellung als 50WP Malathion:

Zunächst wird mit Wessalon S und dem Netzmittel Ampholak XIO ein Prämix im Verhältnis 1 : 1 hergestellt. 28 g der teilhydrophoben Fällungskieselsäuren sowie Wessalon S als Vergleichssubstanz werden kurz in der 500 ml-Quickfit-Rührapparatur fluidisiert. Danach werden 52,1 g Malathion (96 %) langsam unter Rühren aufgetropft und später 6 g des Prämix sowie 3,0 g Dispergiermittel Empikol LZ/P zugegeben. Anschließend werden 10,9 g Füller (Rollokalk) untergemischt und die Mischung mit dem Turbula-Mischer homogenisiert.

Die Proben werden 4 Tage bei Raumtemperatur zur Stabilisierung gelagert. Anschließend werden die Ausgangswerte der CIPAC-Schwebefähigkeit und der Malathion-Gehalte nach CIPAC bestimmt. Ebenfalls nach 4 Tagen werden die Ausgangswerte Malathion nach WHO und Isomalathion nach WHO bestimmt und die Proben anschließend bei 54 °C gelagert und nach 7 Tagen, 14 Tagen, 28 Tagen sowie 56 Tagen vermessen.

Prüfung der Schwebefähigkeit nach CIPAC-12/3/(M)1 vor bzw. nach Lagerung bei 54 °C:

Bei dieser Methode handelt es sich um ein spektralanalytisches Verfahren mit UV als Lichtquelle. Malathion reagiert/hydrolysiert mit Alkali in Na-00-dimethyldithiophosphat und wird mit Cu/Fe-Lösung in einen gelben Kupfer-Komplex umgewandelt und bei 420 μm gemessen. Der Netzmitteleinfluß zur Freisetzung des Malathion ist bei dieser Methode vermutlich groß.

Prüfung des Malathion-Gehaltes nach WHO/SIF/10.R5 mittels Gaschromatographie vor bzw. nach Lagerung bei 54 °C:

Die Methode beruht auf der Auftrennung eines Stoffgemisches durch stoffspezifische Verteilung zwischen stationärer Phase (Säule) und einem Trägergasstrom, die zu unterschiedlichen Geschwindigkeiten/Retentionszeiten führen. Bei dieser Methode herrscht beim Lösen des Malathions von der Kieselsäure ein Extraktionsgleichgewicht zwischen Lösungsmittel und Kieselsäure, das möglicherweise zugunsten der hydrophoben Kieselsäuretypen ausfällt. Ein Netzmitteleinfluß ist vermutlich kaum vorhanden.

Prüfung des Isomalathion-Gehaltes in Anlehnung an WHO/SIF/10.R5 mittels HPLC vor bzw. nach Lagerung bei 54 °C:

Zur Bestimmung des Isomalathion-Gehaltes werden 0,6 g 50WP Malathion eingewogen und mit 65 %iger wäßriger Acetonitrillösung 30 Minuten gemischt. Nach Zentrifugieren und Filtration wird die Probe gegen eine Referenz lösung gemessen. Bei dieser Methode besteht ebenfalls ein Extraktionsgleichgewicht zwischen Lösungsmittel und Kieselsäure, das möglicherweise zugunsten der hydrophoben Kieselsäure ausfällt. Ein Netzmitteleinfluß ist vermutlich kaum vorhanden.

### Lagerung von 1:1-3-Malathion-Konzentraten und Wirkstoffstabilität

Die Wirkstofflösung (96 %ig) wird im Verhältnis 1:1 auf den teilhydrophoben Träger aufgebracht. Diese Mischung wird dann auf Lagerstabilität geprüft. Die so erhaltenen Werte sind ausschließlich auf die Wirkung des Trägers zurückzuführen.

Die im Beispielteil verwendeten Prüfungen sind beschrieben als:

Formulierung Malathion 1:1

28 g Malathion (96 %ig) werden innerhalb 30 Minuten zu 28 g Träger zugetropft und anschließend 3 Minuten nachgerührt sowie im Turbula-Mischer 5 Minuten auf mittlerer Stufe vermischt.

Im Vergleich zu den bisher formulierten 50WP Malathion (28 g hydrophober Träger + 52,1 g Malathionlösung + restliche Formulierungsbestandteile) fällt auf, daß die Mischungen deutlich trockener sind.

Prüfung des Malathion-Gehaltes nach CIPAC 12/3(MI)1 mittels UV/VIS vor bzw. nach Lagerung bei 54 °C:

Analog Lagerung von 5OWP Malathion.

Prüfung des Malathion-Gehaltes nach WHO/SIF/10.R5 mittels GC vor bzw. nach Lagerung bei 54 °C:

Analog Lagerung von 5OWP Malathion.

Tabelle 1

| Fällungskieselsäure | Methanolbenetzbarkeit titriert % | pH-Wert | Oberfläche m²/g | DBP-Aufnahme, Original-material g/100g | DBP-Aufnahme, wasserfrei g/100g | Kohlenstoff % | Mittl. Teilchengröße Coulter Counter µm |
|---|---|---|---|---|---|---|---|
| Standard (Wessalon S) | - | 6,3 | 182 | 240 | 272 | 0,05 | 8,2 |
| Kieselsäure Nr. 1 (Vergleich) | 43 | 7,5 | 121 | 291 | 297 | 2,4 | 7,7 |
| Kieselsäure Nr. 2 (Vergleich) | 48 | 7,8 | 189 | 260 | 282 | 2,3 | 5,3 |
| Kieselsäure Nr. 3 | 20 | 7,8 | 209 | 259 | 283 | 1,6 | 5,3 |
| Kieselsäure Nr. 4 | 28 | 7,3 | 94 | 233 | 250 | 1,0 | 11,8 |
| Standard (Sipernat D10) | 62 | 9,4 | 113 | n.B. | n.B. | 2,9 | 4,3 |
| Kieselsäure Nr. 5 | 49 | 6,9 | 150 | 226 | 257 | 0,5 | 7,4 |
| Kieselsäure Nr. 6 | 49 | 7,7 | 160 | 235 | 265 | 0,9 | 3,5 |

| Fällungskieselsäure | Stampf-dichte g/l | Trocknungs-verlust % | Glüh-verlust % | Leitfähig-keit µS/cm | Siebrückstand Mocker >45 µm % | $SiO_2$ % | $Na_2O$ % | $Fe_2O_3$ ppm | Sulfat als $SO_3$ % |
|---|---|---|---|---|---|---|---|---|---|
| Standard (Wessalon S) | 107 | 5,3 | 4,4 | 710 | 0,06 | n.B. | n.B. | n.B. | n.B. |
| Kieselsäure Nr. 1 (Vergleich) | 152 | 0,7 | n.B. | n.B. | n.B. | n.B. | n.B. | n.B. | n.B. |
| Kieselsäure Nr. 2 (Vergleich) | 139 | 2,8 | n.B. | n.B. | n.B. | n.B. | n.B. | n.B. | n.B. |
| Kieselsäure Nr. 3 | 122 | 3,2 | 3,8 | 62 | 0,02 | 99,5 | 0,15 | 315 | 0,03 |
| Kieselsäure Nr. 4 | 125 | 4,9 | 2,8 | 124 | 0,02 | 99,1 | 0,20 | 347 | 0,08 |
| Standard (Sipernat D10) | 106 | 2,8 | 6,2 | 330 | n.B. | n.B. | n.B. | n.B. | n.B. |
| Kieselsäure Nr. 5 | 133 | 5,0 | 3,9 | 390 | 0,04 | 98,8 | 0,68 | 346 | 0,8 |
| Kieselsäure Nr. 6 | 96 | 4,7 | 4,3 | 380 | < 0,01 | 98,8 | 0,93 | 334 | 0,95 |

n.B. = nicht bestimmt

Tabelle 2
(Versuchsergebnisse (Anwendung als Träger)
Anwendungstechnische und wirkstoffanalytische Untersuchungsergebnisse des 50WP Malathion

| | | | Standard (Wessalon S) | Fällungskieselsäure Nr. 1* | Fällungskieselsäure Nr. 2* | Fällungskieselsäure Nr. 3 |
|---|---|---|---|---|---|---|
| nach 4 Tagen bei RT (Ausgangsw.) | AT (C) | in % | 94,2 ± 0,45 | 87,9 ± 0,46 | 91,0 ± 1,30 | 94,0 ± 0,80 |
| | ZFE (M2) | in % | 54,3 | 50,5 | 52,7 | 49,8 |
| | (M) | in % | 49,3 ± 0,65 | 50,0 | 48,8 | 49,0 |
| | (I) | in % | < 0,025 ± 0 | < 0,025 | < 0,025 | < 0,025 |
| nach 7 Tagen Lagerung bei 54 °C | AT (C) | in % | 85,9 ± 0,90 | 89,6 ± 1,51 | 88,3 ± 0,78 | 92,3 ± 0,56 |
| | ZFE (M2) | in % | 45,1 | 41,2 | 45,4 | 45,3 |
| | (M) | in % | 49,6 | 47,6 | 47,0 | 48,5 |
| | (I) | in % | 0,65 | 0,79 | 0,47 | 0,56 |
| nach 14 Tagen Lagerung bei 54 °C | AT (C) | in % | 86,4 ± 0,34 | 89,2 ± 3,11 | 87,4 ± 1,70 | 93,3 ± 0,46 |
| | ZFE (M2) | in % | 37,6 | 45,2 | 46,3 | 43,8 |
| | (M) | in % | 47,0 ± 0,53 | 48,8 | 45,1 | 46,5 |
| | (I) | in % | 0,97 ± 0,03 | 1,39 | 0,93 | 0,99 |
| nach 28 Tagen Lagerung bei 54 °C | AT (C) | in % | 87,4 ± 1,22 | 81,4 ± 0,78 | 81,9 ± 2,99 | 84,2 ± 2,35 |
| | ZFE (M2) | in % | 40,9 | 42,6 | 44,7 | 44,3 |
| | (M) | in % | 45,9 | 47,9 | 45,7 | 45,1 |
| | (I) | in % | 1,06 | 1,23 | 0,98 | 0,98 |
| nach 56 Tagen Lagerung bei 54 °C | AT (C) | in % | 90,2 ± 4,53 | 74,2 ± 3,20 | 75,5 ± 4,17 | 77,0 ± 2,25 |
| | ZFE (M2) | in % | 30,5 | 34,7 | 40,0 | 36,1 |
| | (M) | in % | 44,0 | 46,0 | 40,7 | 42,9 |
| | (I) | in % | 1,94 | 2,70 | 1,66 | 2,16 |

*Vergleichsbeispiel

EP 0 798 348 B1

Tabelle 3
Abweichungen, absolut in % (Ausgangswert – Meßwert) nach Lagerung bei 54 °C des 50WP Malathion

| | | | Standard (Wessalon S) | Fällungskieselsäure Nr. 1* | Fällungskieselsäure Nr. 2* | Fällungskieselsäure Nr. 3 |
|---|---|---|---|---|---|---|
| Ausgangswert nach 4 Tagen bei RT | AT (C) | in % | 94,2 ± 0,45 | 87,9 ± 0,46 | 91,0 ± 1,30 | 94,0 ± 0,80 |
| | ZFE (M2) | in % | 54,3 | 50,5 | 52,7 | 49,8 |
| | (M) | in % | 49,3 ± 0,65 | 50,0 | 48,8 | 49,0 |
| | (I) | in % | < 0,025 ± 0 | < 0,025 | < 0,025 | < 0,025 |
| Abweichung nach 7 Tagen Lagerung bei 54 °C | AT (C) | in % | − 8,3 | + 1,7 | − 2,7 | − 1,7 |
| | ZFE (M2) | in % | − 9,2 | − 9,3 | − 7,2 | − 4,5 |
| | (M) | in % | + 0,3 | − 2,4 | − 1,8 | − 0,5 |
| | (I) | in % | + 0,625 | + 0,765 | + 0,445 | + 0,535 |
| Abweichung nach 14 Tagen bei 54 °C | AT (C) | in % | − 7,8 | + 1,3 | + 2,3 | − 5,3 |
| | ZFE (M2) | in % | − 16,7 | − 5,3 | − 6,4 | − 6,0 |
| | (M) | in % | − 2,3 | − 1,2 | − 3,7 | − 2,5 |
| | (I) | in % | + 0,945 | + 1,365 | + 0,905 | + 0,965 |
| Abweichung nach 28 Tagen bei 54 °C | AT (C) | in % | − 6,8 | − 6,5 | − 9,1 | − 9,8 |
| | ZFE (M2) | in % | − 13,4 | − 7,9 | − 8,0 | − 5,5 |
| | (M) | in % | − 3,4 | − 2,1 | − 3,1 | − 3,9 |
| | (I) | in % | + 1,035 | + 1,205 | + 0,955 | + 0,955 |
| Abweichung nach 56 Tagen bei 54 °C | AT (C) | in % | − 4,0 | − 13,7 | − 15,5 | − 17,0 |
| | ZFE (M2) | in % | − 23,8 | − 15,8 | − 12,7 | − 13,7 |
| | (M) | in % | − 5,3 | − 4,0 | − 8,1 | − 6,1 |
| | (I) | in % | + 1,915 | + 2,675 | + 1,635 | + 2,135 |

*Vergleichsbeispiel

EP 0 798 348 B1

Tabelle 4
Wirkstoffanalytische Untersuchungsergebnisse der 1:1 Malathion-Konzentrate

| | Standard (Wessalon S) | Fällungskieselsäure Nr. 3 | Fällungskieselsäure Nr. 1* | Fällungskieselsäure Nr. 5 | Fällungskieselsäure Nr.4 |
|---|---|---|---|---|---|
| Ausgangswert 1Tag RT<br>ZFE (M, GC) in %<br>ZFE (M2, UV) in % | 48,4 ± 1,33<br>44,8 | 49,2 ± 0,27<br>55,4 | 52,3 ± 2,39<br>47,1 | 46,8 ± 1,28<br>46,1 | 48,9 ± 0,09<br>50,7 |
| nach 7 Tagen 54 °C<br>ZFE (M, GC) in %<br>ZFE (M2, UV) in % | 46,1 ± 0,98<br>40,7 | 48,5 ± 0,27<br>45,6 | 46,8 ± 1,12<br>41,7 | 46,2 ± 1,11<br>41,7 | 57,1 ± 0,76<br>51,2 |
| nach 14 Tagen 54 °C<br>ZFE (M, GC) in %<br>ZFE (M2, UV) in % | 43,8 ± 0,81<br>40,5 | 48,3 ± 0,86<br>42,8 | 48,1 ± 0,40<br>47,6 | 46,1 ± 5,68<br>38,7 | 55,1<br>47,7 |
| nach 29 Tagen 54 °C<br>ZFE (M, GC) in %<br>ZFE (M2, UV) in % | 40,6 ± 2,44<br>36,1 | 46,7 ± 0,26<br>45,4 | 46,9 ± 1,25<br>41,1 | 43,5 ± 0,34<br>35,2 | 51,3 ± 0,5<br>38,9 |
| nach 56 Tagen 54 °C<br>ZFE (M, GC) in %<br>ZFE (M2, UV) in % | 34,3 ± 1,60<br>34,5 | 44,9 ± 0,45<br>41,9 | 44,3 ± 0,32<br>43,9 | 39,7 ± 1,17<br>33,3 | -<br>- |

ZFE (M, GC)  = Malathion-Gehalt nach WHO mittels GC          *Vergleichsbeispiel
ZFE (M2, UV) = Malathion-Gehalt nach CIPAC mittels UV/VIS
AT (C)       = CIPAC-Schwebefähigkeit
ZFE (M)      = Malathion-Gehalt nach WHO mittels GC
ZFE (M2)     =    Malathion-Gehalt nach CIPAC mittels UV/VIS
(M)          =    Malathion-Gehalt nach WHO mittels GC
(I)          =    Isomalathion-Gehalt nach WHO mittels HPLC

Bei Bewertung der Ergebnisse der Fischer-Schwebefähigkeit und der Malathion-Gehalte sowie der Isomalathion-Gehalte der 5OWP Malathion sollte die möglichen Einflüsse von z.B. Netzmitteln auf die Meßwertgenauigkeit bedacht werden.

Der Verfahrens fehler bei Bestimmung des Malathiongehaltes nach CIPAC mittels UV/VIS wird mit ± 5 % Malathion angegeben. Bei einer Probe wird nach 14 Tagen eine Doppelbestimmung, die eine Standardabweichung von 0,7 % zeigt, durchgeführt.

Die Malathion-Gehalte nach WHO zeigen eine Standardabweichung zwischen 0,1 und 0,7 %. Die Standardabweichung bei den Isomalathion-Gehalten liegt bei zwei Doppelbestimmungen in den gesamten Meßreihen bei 0 bis 0,03 %.

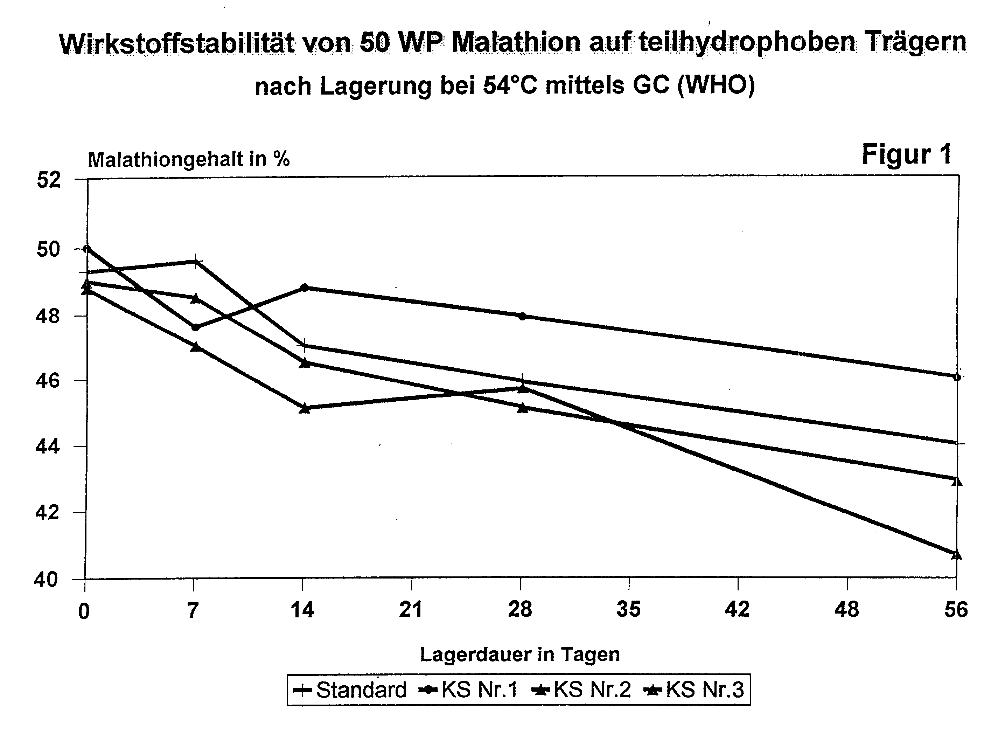

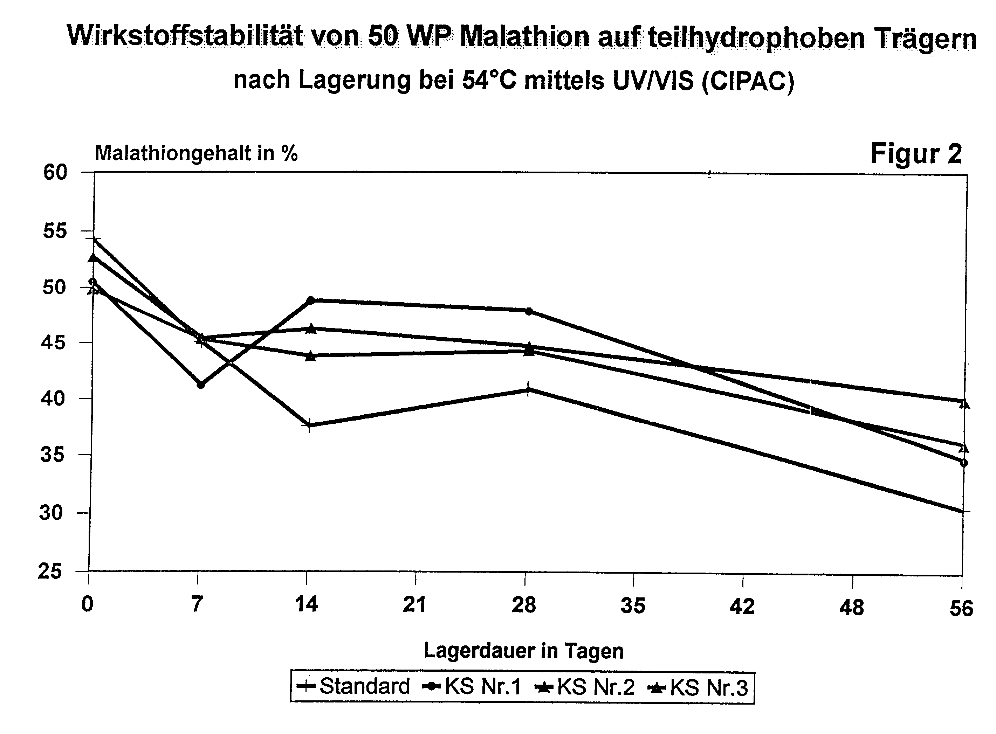

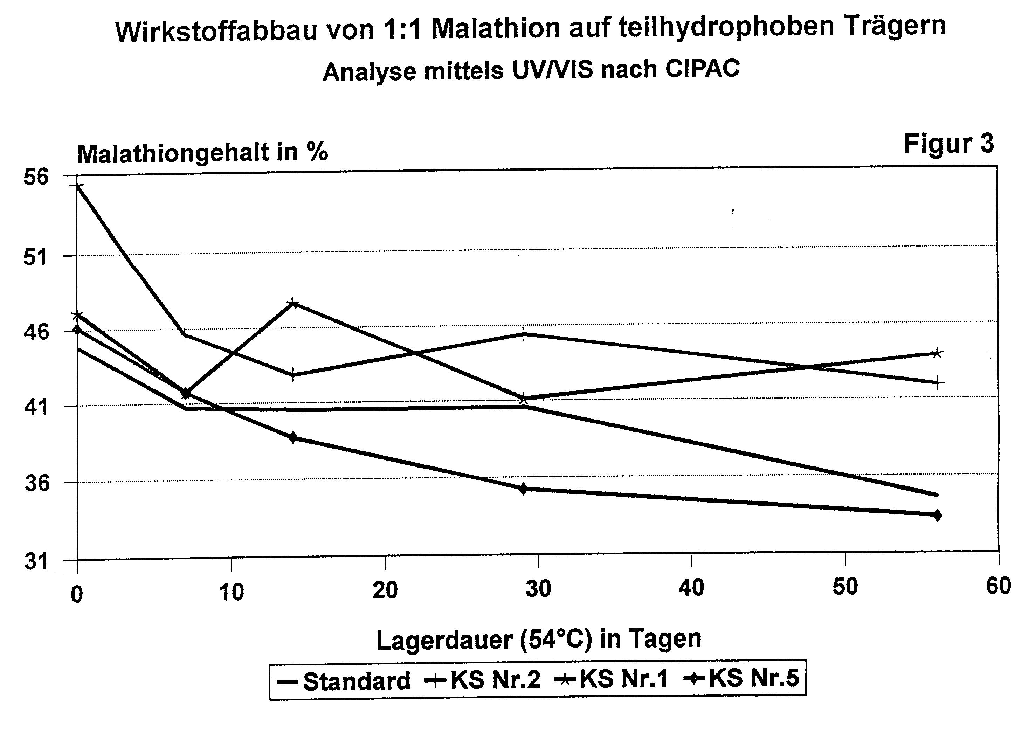

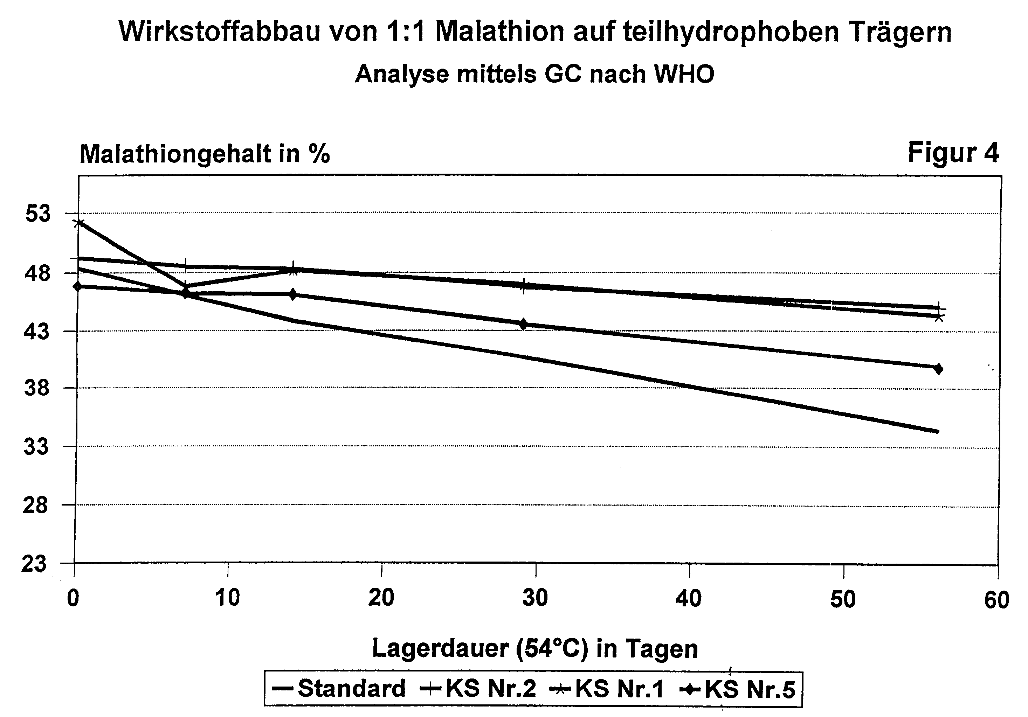

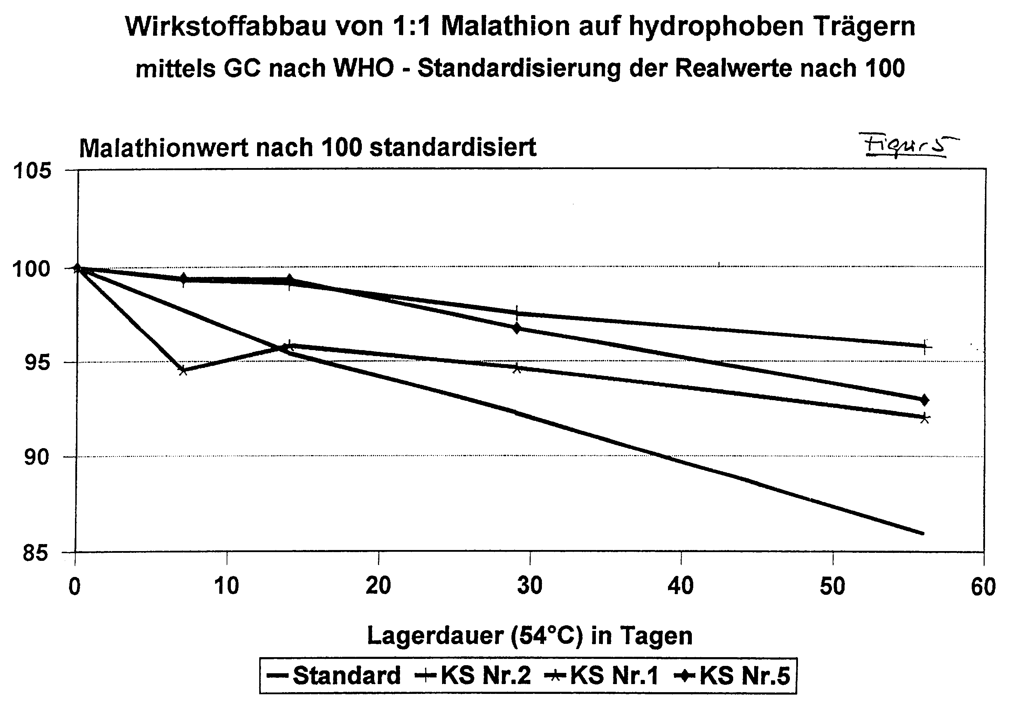

Die Ergebnisse der Wirkstoffstabilität sind in den Figuren 1 bis 5 graphisch dargestellt.

Die Versuche zeigen, daß die Wirkstoffstabilität durch die Verwendung der erfindungsgemäßen teilhydrophoben Fällungskieselsäuren erhöht werden kann und im Vergleich zu den bekannten hochhydrophoben Fällungskieselsäuren Netz- und Dispergiermittel z.B. in den Pflanzenschutzformulierungen eingespart werden können.

**Herstellung der Entschäumerdispersionen**

Zur Herstellung der 5 %igen Entschäumerdispersionen werden 57 g des jeweiligen Öles z.B. Shell Risella G 118 (jetzt Shell Risella G 18), Viskosität 40cSt. in 250 ml Bechergläsern vorgelegt, anschließend 3 g der erfindungsgemäßen Kieselsäure bzw. des Sipernat D10 hinzugefügt und vorsichtig miteinander verrührt. Anschließend erfolgt die Dispergierung mit Hilfe eines Ultra Turrax T50 bei 10000 Upm für 5 Minuten.

**Stabilitätsprüfung der Entschäumerdispersionen**

Hierfür werden die noch heißen Dispersionen in 100 ml Glaszylinder gefüllt, an einem erschütterungsfreien Ort bei Raumtemperatur aufbewahrt und in regelmäßigen Zeitabständen eine mögliche Phasentrennung protokolliert (Angabe in ml klare Ölphase).

Versuchsergebnis (Anwendung in Entschäumer)

| Entschäumerdispersion | 1 Monat klare Ölphase[ml]% | 3 Monate |
|---|---|---|
| KS6 M | 0 | 0 |
| KS6 S | 0 | 0 |
| D10 M | 60 | 60 |
| D10 S | 27 | 50 |
| KS 6 M = Kieselsäure Nr. 6 in Mineralöl KS 6 S = Kieselsäure Nr. 6 in Silikonöl D10 M = Sipernat D10 in Mineralöl D10 S = Sipernat D10 in Silikonöl | | |

Figuren 6 und 7

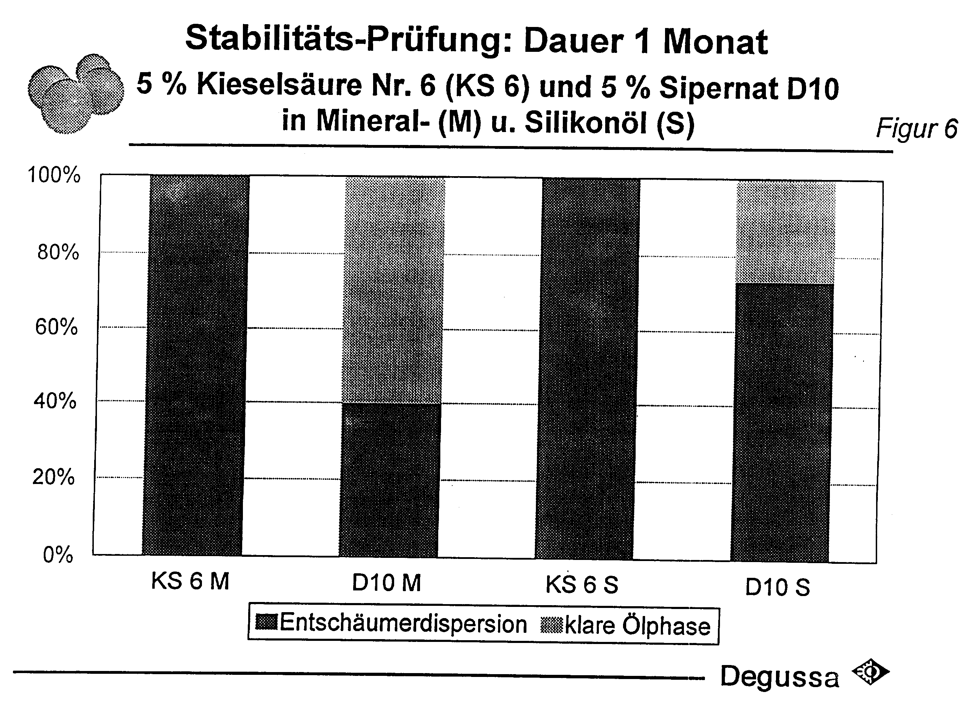

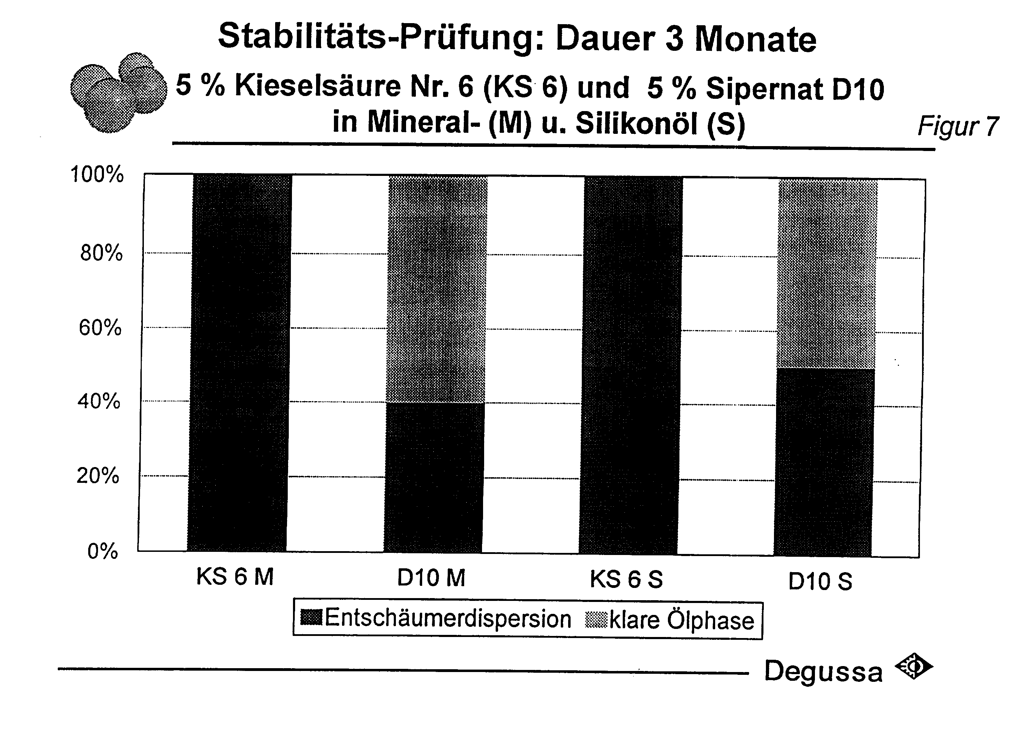

Figuren 6 und 7 zeigen, daß die erfindungsgemäße Fällungskieselsäure in Mineralöl und Silikonöl eingearbeitet, nach 3 Monaten noch gar keine Phasentrennung aufzeigt. Während mit dem bekannten Sipernat D10 bereits nach einem Monat in beiden verwendeten Ölen eine erhebliche Phasentrennung vorliegt.

**Entschäumerprüfung mittels Latex**

In einem Edelstahlbecher werden 160 g Latex eingewogen und nach Zugabe von 0,3 g Entschäumer mit einem Hamilton-Beach-Scovill Mixer in Schalterstellung L (niedrigste Rührgeschwindigkeit: ca. 4000 U/min) 3 Minuten aufgeschäumt. Das Gewicht von 100 ml dieses Schaums wird durch Differenzwägung in einem Edelstahlmeßzylinder ermittelt. Ein hohes Latexgewicht (nahe 100 g) steht für ein gutes Entschäumungsvermögen der jeweiligen Probe. Die Mittelwerte werden aus mindestens zwei Einzelbestimmungen ermittelt.

Ein Hamilton-Beach-Scovill Mixer ist ein normalerweise im Haushalt zu verwendender Milchshake-Mixer, bei welchem drei Rührgeschwindigkeiten eingestellt werden können (L,M und H). Schalterstellung "L" bedeutet ca. 4000 U/min. Die aufzurührende Substanz wird mittels einem Flügelrührer mit beweglichen "Flügeln" aufgerührt.

Versuchsergebnis (Anwendung in Entschäumer)

| Ansätze: | Latexgewicht g/100 ml Mittelwert/Standardabweichung |
|---|---|
| 1 KS6 M | 71 / 0,5 |
| 2 KS6 S | 89 / 0,3 |
| 3 D10 M | 78 / 0,2 |
| 4 D10 S | 90 / 0,3 |
| Blindwert | 53 / 0,9 |
| KS6 M = Kieselsäure Nr. 6 in Mineralöl KS6 S = Kieselsäure Nr. 6 in Siliconöl D10 M = Sipernat D10 in Mineralöl D10 S = Sipernat D10 in Silikonöl | |

Formel zur Berechnung des Schaumgehalts in % nach Durchführung des Latextests:

$$\frac{100 \text{ g - Auswaage Latexgewicht[g] nach Entschäumerzugabe*}^{1}}{100 \text{ g - Auswaage Blindwert*}^{2}\text{[g]}} \times 100$$

*1: Differenzwägung nach Zugabe des jeweiligen Entschäumers zur Latexdispersion und anschließendem dreiminütigem Rühren

*2: Differenzwägung nach dreiminütigem Rühren der Latexdispersion ohne Entschäumerzugabe

Figur 8

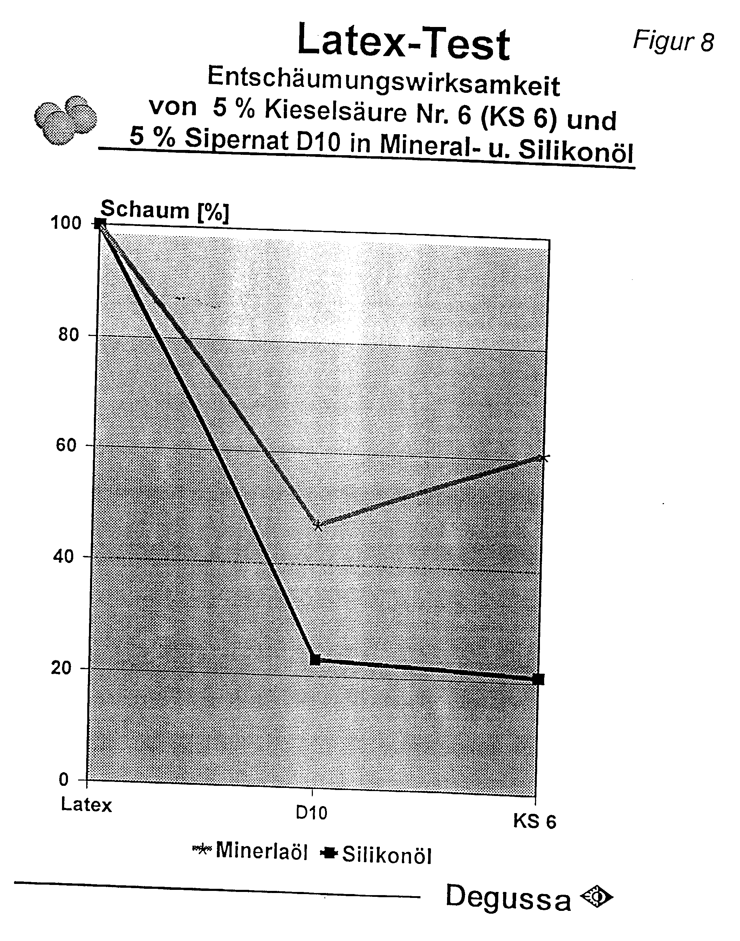

Figur 8 zeigt, daß die erfindungsgemäße Fällungskieselsäure in Mineralöl zwar in diesem durchgeführten Test eine marginal geringere Entschäumerwirkung zeigt als Sipernat D10, dieses Ergebnis sich jedoch nicht in weiteren anwendungstechnischen Tests fortsetzen muß, die Stabilität aber bei weitem besser ist als mit Sipernat D10. In Silikonöl zeigt die erfindungsgemäße Fällungskieselsäure eine zu Sipernat D10 identische Entschäumerwirkung.

Die durchgeführten Untersuchungen zeigen, daß mit Hilfe der erfindungsgemäßen teilhydrophoben Fällungskieselkieselsäure die Stabilität einer Entschäumerdispersion maßgeblich verbessert werden kann, während die Entschäumungswirkung mit einer bekannten hochhydrophoben Fällungskieselsäuren vergleichbar ist.

**Patentansprüche**

1. Teilhydrophobe Fällungskieselsäure, gekennzeichnet durch eine Methanolbenetzbarkeit von 10 - 49 %.

2. Teilhydrophobe Fällungskieselsäure nach Anspruch 1 mit einer DBP-Aufnahme wasserfrei von größer 250 g/100 g (DBP-Zahl).

3. Teilhydrophobe Fällungskieselsäure nach Anspruch 1 mit einer mittleren Teilchengröße von 1 bis 12 μm.

4. Teilhydrophobe Fällungskieselsäure nach Anspruch 1 mit einem Kohlenstoffgehalt von 0,3 bis 1,85 %.

5. Teilhydrophobe Fällungskieselsäure nach Anspruch 4 mit einem Trocknungsverlust von 2,6 bis 10 %.

6. Teilhydrophobe Fällungskieselsäure nach Anspruch 5 mit einem pH-Wert von 5,5 bis 10.

7. Teilhydrophobe Fällungskieselsäure nach Anspruch 2 mit einem Kohlenstoffgehalt von 0,3 bis 1,85 %

**8.** Teilhydrophobe Fällungskieselsäure nach Anspruch 7 mit einem Trocknungsverlust von 2,6 bis 10 %.

**9.** Teilhydrophobe Fällungskieselsäure nach Anspruch 8 mit einem pH-Wert von 5,5 bis 10.

**10.** Teilhydrophobe Fällungskieselsäure nach Anspruch 3 mit einem Kohlenstoffgehalt von 0,3 bis 1,85 %.

**11.** Teilhydrophobe Fällungskieselsäure nach Anspruch 10 mit einem Trockungsverlust von 2,6 bis 10 %.

**12.** Teilhydrophobe Fällungskieselsäure nach Anspruch 11 mit einem pH-Wert von 5,5 bis 10.

**13.** Verfahren zur Herstellung der teilhydrophoben Fällungskieselsäure gemäß Ansprüche 1 bis 12, dadurch gekennzeichnet, daß man zur Erzielung des gewünschten Hydrophobierunggrades die notwendige Hydrophobierungsmittelmenge unter Anwendung hoher Scherkräfte mittels einer kontinuierlichen Schervorrichtung die Ultra - Turrax, Kothoff - Mischsirene oder Rheinhütte - Mischer mit nach bekanntem Verfahren hergestellter Fällungskieselsäuresuspension nach vorgegebenem Verhältnis bei sehr kurzer Verweilzeit von maximal 5 Sekunden und niedrigem pH-Wer von 3 vermischt, die hydrophobierungsmittelhaltige Fällungskieselsäuresuspension filtriert und salzfrei wäscht, den mit Hydrophobierungsmittel homogen vermischten Fällungskieselsäurefilterkuchen nach bekannten Verfahren trocknet, thermisch nachbehandelt oder tempert und anschliessend einer mechanischen- bzw. Strahlvermahlung unterzieht.

**14.** Verwendung der teilhydrophoben Fällungskieselsäure gemäß Anspruch 1 bis 12 in Wirkstofformulierungen als Träger.

**15.** Verwendung der teilhydrophoben Fällungskieselsäure gemäß Anspruch 14 in Formulierungen hydrolyseempfindlicher Wirkstoffe als Träger.

**16.** Verwendung der teilhydrophoben Fällungskieselsäure gemäß Anspruch 1 bis 12 in Entschäumern.


**Claims**

**1.** Partially hydrophobic precipitated silica, characterised by a methanol wettability of 10-49%.

**2.** Partially hydrophobic precipitated silica according to claim 1 having an anhydrous DBP absorption (DBP value) of greater than 250 g/100 g.

**3.** Partially hydrophobic precipitated silica according to claim 1 having an average particle size of 1 to 12 μm.

**4.** Partially hydrophobic precipitated silica according to claim 1 having a carbon content of 0.3 to 1.85%.

**5.** Partially hydrophobic precipitated silica according to claim 4 having a drying loss of 2.6 to 10%.

**6.** Partially hydrophobic precipitated silica according to claim 5 having a pH value of 5.5 to 10.

**7.** Partially hydrophobic precipitated silica according to claim 2 having a carbon content of 0.3 to 1.85%.

**8.** Partially hydrophobic precipitated silica according to claim 7 having a drying loss of 2.6 to 10%.

**9.** Partially hydrophobic precipitated silica according to claim 8 having a pH value of 5.5 to 10.

**10.** Partially hydrophobic precipitated silica according to claim 3 having a carbon content of 0.3 to 1.85%.

**11.** Partially hydrophobic precipitated silica according to claim 10 having a drying loss of 2.6 to 10%.

**12.** Partially hydrophobic precipitated silica according to claim 11 having a pH value of 5.5 to 10.

**13.** Process for the production of the partially hydrophobic silica according to claims 1 to 12, characterised in that, in order to achieve the desired degree of hydrophobisation, the necessary quantity of hydrophobing agent is mixed in accordance with a preset ratio with a precipitated silica suspension produced using a known method, with a very short residence time of at most 5 seconds and a low pH value of 3 with application of elevated shear forces by means of a continuous shearing device, namely Ultra-Turrax, Kothoff-Mischsirene or Rheinhütte mixer, the precipitated silica suspension containing the hydrophobing agent is filtered and washed until free of salt, the precipitated silica filter cake homogeneously mixed with the hydrophobing agent is dried using known methods, thermally post-treated or conditioned and subjected to mechanical or jet grinding.

**14.** Use of the partially hydrophobic precipitated silica according to claims 1 to 12 as a support in active substance formulations.

**15.** Use of the partially hydrophobic precipitated silica according to claim 14 as a support in formulations of active substances sensitive to hydrolysis.

**16.** Use of the partially hydrophobic precipitated silica according to claim 1 to 12 in defoamers.


**Revendications**

**1.** Silice précipitée partiellement hydrophobe,
caractérisée par
une mouillabilité par le méthanol de 10-49 %.

**2.** Silice précipitée partiellement hydrophobe selon la revendication 1 avec une prise de DBP anhydre supérieure à 250 g/100 g (indice DBP).

**3.** Silice précipitée partiellement hydrophobe selon la revendication 1 avec une taille de particule moyenne de 1 à 12 μm.

**4.** Silice précipitée partiellement hydrophobe selon la revendication 1 avec une teneur en carbone de 0,3 à 1,85 %.

**5.** Silice précipitée partiellement hydrophobe selon la revendication 4 avec une perte au séchage de 2,6 à 10 %.

**6.** Silice précipitée partiellement hydrophobe selon la revendication 1 avec un pH de 5,5 à 10.

**7.** Silice précipitée partiellement hydrophobe selon la revendication 2 avec une teneur en carbone de 0,3 à 1,85 %.

**8.** Silice précipitée partiellement hydrophobe selon la revendication 7 avec une perte au séchage de 2,6 à 10 %.

**9.** Silice précipitée partiellement hydrophobe selon la revendication 8 avec un pH de 5,5 à 10.

**10.** Silice précipitée partiellement hydrophobe selon la revendication 3 avec une teneur en carbone de 0,3 à 1,85 %.

**11.** Silice précipitée partiellement hydrophobe selon la revendication 10 avec une perte au séchage de 2,6 à 10 %.

**12.** Silice précipitée partiellement hydrophobe selon la revendication 11 avec un pH de 5,5 à 10.

**13.** Procédé de fabrication de silice précipitée partiellement hydrophobe selon les revendications 1 à 12,
caractérisé en ce que
pour obtenir le degré d'hydrophobie souhaité on mélange la quantité nécessaire de produit rendant hydrophobe en utilisant un cisaillement important, au moyen d'un dispositif de cisaillement important continu tel que Ultra-Terrax, mélangeur Kotthoff ou mélangeur Rheinhütte, à la suspension de silice précipité préparée selon le procédé connu dans la proportion prescrite en un temps de séjour très court de 5 secondes au maximum et à un faible pH de 3, on filtre la suspension de silice précipitée contenant le produit rendant hydrophobe et on lave jusqu'à élimination des sels, on sèche le gâteau de filtre de silice précipitée mélangée de façon homogène au produit rendant hydrophobe selon le procédé connu, on fait subir un post-traitement thermique ou on étuve et ensuite on soumet à un broyage mécanique ou par jets.

**14.** Utilisation de la silice précipitée partiellement hydrophobe selon les revendications 1 à 12 dans des formulations de principes actifs sous forme de supports.

15. Utilisation de la silice précipitée partiellement hydrophobe selon la revendication 14 comme support de principes actifs sensibles à l'hydrolyse dans des formulations.

16. Utilisation de la silice précipitée partiellement hydrophobe selon les revendications 1 à 12 dans des antimousses.

Wirkstoffstabilität von 50 WP Malathion auf teilhydrophoben Trägern

nach Lagerung bei 54°C mittels GC (WHO)

Figur 1

Malathiongehalt in %

Lagerdauer in Tagen

+ Standard  ● KS Nr.1  ▲ KS Nr.2  ✱ KS Nr.3

# Wirkstoffstabilität von 50 WP Malathion auf teilhydrophoben Trägern
## nach Lagerung bei 54°C mittels UV/VIS (CIPAC)

**Figur 2**

Malathiongehalt in %

Lagerdauer in Tagen

─┼─ Standard ─◆─ KS Nr.1 ─★─ KS Nr.2 ─★─ KS Nr.3

# Wirkstoffabbau von 1:1 Malathion auf teilhydrophoben Trägern

## Analyse mittels UV/VIS nach CIPAC

**Figur 3**

Malathiongehalt in %

Lagerdauer (54°C) in Tagen

— Standard  + KS Nr.2  ✳ KS Nr.1  ✦ KS Nr.5

# Wirkstoffabbau von 1:1 Malathion auf teilhydrophoben Trägern
## Analyse mittels GC nach WHO

**Malathiongehalt in %**

**Figur 4**

**Lagerdauer (54°C) in Tagen**

—Standard ╂KS Nr.2 ✳KS Nr.1 ✦KS Nr.5

EP 0 798 348 B1

# Wirkstoffabbau von 1:1 Malathion auf hydrophoben Trägern
## mittels GC nach WHO - Standardisierung der Realwerte nach 100

Malathionwert nach 100 standardisiert

Figur 5

Lagerdauer (54°C) in Tagen

— Standard ＋KS Nr.2 ＊KS Nr.1 ✦KS Nr.5

# Stabilitäts-Prüfung: Dauer 1 Monat
## 5 % Kieselsäure Nr. 6 (KS 6) und 5 % Sipernat D10
## in Mineral- (M) u. Silikonöl (S)

*Figur 6*

Legend: ■ Entschäumerdispersion ▨ klare Ölphase

Degussa

EP 0 798 348 B1

**Stabilitäts-Prüfung: Dauer 3 Monate**

5 % Kieselsäure Nr. 6 (KS 6) und  5 % Sipernat D10
in Mineral- (M) u. Silikonöl (S)

*Figur 7*

Legend: ■ Entschäumerdispersion  ▨ klare Ölphase

Categories: KS 6 M, D10 M, KS 6 S, D10 S

Degussa

EP 0 798 348 B1

# Latex-Test

*Figur 8*

## Entschäumungswirksamkeit
## von 5 % Kieselsäure Nr. 6 (KS 6) und
## 5 % Sipernat D10 in Mineral- u. Silikonöl

Schaum [%]

★ Minerlaöl ■ Silikonöl

Degussa ◈